**Europäisches Patentamt**

**European Patent Office**

**Office européen des brevets**

(19)

(11) Veröffentlichungsnummer: **0 008 051**
**A1**

(12)

# EUROPÄISCHE PATENTANMELDUNG

(21) Anmeldenummer: 79102699.0

(22) Anmeldetag: 30.07.79

(51) Int. Cl.³: **H 02 B 1/08**

(30) Priorität: 03.08.78 DE 2833950

(43) Veröffentlichungstag der Anmeldung: **20.02.80**
**Patentblatt 80/4**

(84) Benannte Vertragsstaaten: **AT BE CH FR IT NL**

(71) Anmelder: **BROWN, BOVERI & CIE Aktiengesellschaft Mannheim, Kallstadter Strasse 1, D-6800 Mannheim Käfertal (DE)**

(72) Erfinder: **Leible, Erwin, Breslauer Strasse 15, D-6930 Eberbach (DE)**

(74) Vertreter: **Kempe, Wolfgang, Dr. et al, c/o Brown, Boveri & Cie AG Postfach 351, D-6800 Mannheim 1 (DE)**

(54) **Geräteabdeckung für schutzisolierte Verteilungseinsätze.**

(57) Eine aus Isolierstoffprofilteilen, einsteckbaren Eckverbindern und einer Abdeckplatte zusammenfügbare Geräteabdeckung für schutzisolierte Verteilungseinsätze zeichnet sich erfindungsgemäß dadurch aus, daß sie sich im wesentlichen aus wenigstens einem entsprechend den Erfordernissen senkrecht zu seiner Längsachse abgelängten Stück eines endlosen Isolierstoffprofiles (10 . . . 13 u. a.), aus einander gleichen oder spiegelbildlichen, auch nach der Montage sichtbar bleibenden End- oder Eckkappen (14 . . . 17 u. a.) mit an die Profilierung des Isolierstoffprofiles angepaßten und mit dem Profil zusammensteckbaren Anformungen (28, 29, 31, 32 u. a.) sowie mit Befestigungsöffnungen (19 . . . 22 u. a.) zur Befestigung der Geräteabdeckung und aus einer ebenfalls abgelängten Abdeckplatte (18 u. a.) mit Öffnungen oder leicht austrennbaren Sektoren (23 . . . 27) für den Durchtritt von Installationsgeräten oder sonstigen Installationselementen zusammensetzt. Die Abdeckplatte kann hierbei auch noch Bestandteil des endlosen Isolierstoffprofiles (37) sein. Erzielbar sind hierdurch Geräteabdeckungen unterschiedlicher Größe bei vergleichsweise geringen Aufwendungen für Werkzeuge und Lagerhaltungen, bei denen geringfügigere Ungenauigkeiten beim Abtrennvorgang der einzelnen Teile nicht augenscheinlich werden.

B R O W N , B O V E R I & CIE    AKTIENGESELLSCHAFT

Mannheim

Mp.-Nr. 613/78

"Geräteabdeckung für schutzisolierte Verteilungseinsätze"

Die Erfindung bezieht sich auf eine aus Isolierstoffprofilteilen, einsteckbaren Eckverbindern und einer Abdeckplatte
zusammenfügbare Geräteabdeckung für schutzisolierte Verteilungseinsätze.

Mit der Einführung der Basis-Norm für Zählerpläte nach DIN
43 870 sind Verteilungseinsätze auf den Markt gebracht worden,
die in Anlehnung an die Zählerplätze nach deren Rastermaßen
konzipiert sind. Dieses hat den Vorteil, daß Zählerplätze und
Verteilungseinsätze nebeneinander und übereinander, das heißt
also miteinander kombiniert eingesetzt werden können. Außerdem können Verteilungseinsätze mit Umhüllungen nach DIN 43 870 (Schränke) auch als reine Verteilungen Verwendung finden. Daraus ergibt sich, daß die erforderlichen Abdeckungen der Verteilungseinsätze die Höhenbereiche von 750, 900, 1050 sowie 1200 mm und die Breitenbereiche von 250 und 500 mm überdecken müssen.

Marktüblich sind kompakte, aus Kunststoff gepreßte oder gespritzte Abdeckungen. Hierbei ergibt sich für den Hersteller der Nachteil, daß er bis zu acht große und teuere Werkzeuge benötigt.

Um diese Kosten für mehrere große Werkzeuge zu sparen, ist das Abdeckungsproblem auch dadurch gelöst worden, daß die Abdeckung modular erfolgt, das heißt durch Verwendung zweier oder mehrerer Abdeckungen für die oberen Zähleranschlußräume nach DIN 43 870 mit den Höhenmaßen 150, 300 und 450 mm und dem Breitenmaß von 250 mm. Derartige modulare Abdeckungen werden allerdings vom Anwender zunehmend abgelehnt.

Zur Verringerung der Werkzeug- und Montagekosten hat man bereits vor Jahren vorgeschlagen, Zähler- und Verteilungstafeln nach dem Baukastenprinzip zusammenzufügen, wobei Seitenwandungen Verwendung fanden, die aus abgelängten Teilen eines langen Bandes oder einer großen Platte mit bereits angeformten Schienenprofilen bestehen. Diese Seitenwandungen wurden an ihren Stoßkanten miteinander verschweißt und dann mit einem Deckel sowie einem Bodenteil verbolzt. Der dem Anmeldungsgegenstand vergleichbare Deckel für derartige Zähler- und Verteilungstafeln wurde als eine Art Kassette ausgebildet, bestehend aus einem Rahmen und einem in diesen Rahmen eingeschobenen Abdeckblech. Die einzelnen Rahmenteil für den Deckel mußten bei der Montage entweder ebenfalls miteinander verschweißt oder stattdessen miteinander verschraubt oder vernietet werden (DE-GM 1 834 587). Trotz einigen Rationalisierungseffekten gegenüber noch älteren Konstruktionen ist die Montage derartiger Zähler- und Verteilungstafeln einschließlich der zugehörigen Deckel bzw. Abdeckteile recht aufwendig und nur in einer entsprechend ausgerüsteten Fabrikhalle oder Werkstatt mit Hilfsvorrichtungen zu bewerkstelligen, keinesfalls hingegen am Aufstellungsort derartiger Verteilerkästen oder in einem reinen Lagerraum.

Bei einem anderen bekannten Installationsverteilerschrank (DE-GM 72 23 273) wird die dortige, übrigens als herausschwenkbare, geschlossene Tür ausgebildete Geräteüberdeckung mit einem Blendenrahmen kombiniert. Dieser Blendenrahmen besteht aus einzelnen abgelängten und auf Gehrung geschnittenen Hohlprofilteilen, deren jeweilige Enden auf Winkelstücke aufgeschoben werden, so daß ein geschlossener Rahmen, eben der genannte Blendenrahmen, entsteht. An diesen so zusammengesetzten Blendenrahmen sind allerdings noch Bohrungen und Schlitze anzubringen um ihn einerseits mit dem eigentlichen Verteilerkasten zu verbinden und andererseits mit Scharnierteilen zur Einhängung der eigentlichen (also schwenkbaren) Abdeckplatte bzw. Tür. Um diesem Blendenrahmen ein ansehnliches Aussehen zu verleihen, müssen die genannten Gehrungsschnitte sehr präzise angebracht werden, weil anderenfalls unerwünschte und sehr augenfällige, leicht schiefe Schlitze an den Stoßkanten der einzelnen Profilteilen entstehen. Die Abdeckplatte bzw. Tür ist als ebenes Teil mit rundum verlaufenden Abkantungen ausgebildet, das heißt sie muß jeweils der erforderlichen Größe des Verteilerkastens angepaßt sein, so daß sich eine gesonderte Lagerhaltung für jede einzelne Größe von Verteilerkästen nicht vermeiden läßt.

Aufgabe der Erfindung ist es, das Abdeckungsproblem unter Vermeidung der geschilderten Nachteile auf möglichst einfache Weise zu lösen, das heißt also Abdeckungen zu schaffen, die den Hersteller bezüglich der erforderlichen Werkzeugkosten nicht übermäßig belasten, dem Bedürfnis des Zwischenhandels und des Anwenders nach möglichst geringer Lagerhaltung entsprechen und den Wünschen des Anwenders und des Endverbrauchers nach geschlossenen, nicht modular zusammengesetzten Abdeckungen entgegenkommen.

Zur Lösung dieser Aufgabe wird erfindungsgemäß vorgeschlagen, eine Geräteabdeckung zu schaffen, die sich im wesentlichen aus wenigstens einem entsprechend den Erfordernissen senkrecht zu seiner Längsachse abgelängten Stück eines endlosen Isolierstoff-Profiles, ferner aus einander gleichen oder spiegelbildlichen, auch nach der Montage sichtbar bleibenden End- oder Eckkappen mit an die Profilierung des Isolierstoff-Profiles angepaßten und mit dem Profil zusammensteckbaren Anformungen sowie mit Befestigungsöffnungen zur Befestigung der Geräteabdeckung und schließlich aus einer ebenfalls abgelängten Abdeckplatte mit Öffnungen oder leicht austrennbaren Sektoren für den Durchtritt von Installationsgeräten oder sonstigen Installationselementen zusammengesetzt. Hierdurch ist es möglich, unter Zuhilfenahme einfacher Trennwerkzeuge die Geräteabdeckungen in jeweils der Größe herzustellen, die gerade benötigt wird. Dementsprechend verringern sich auch die Lagerhaltungsaufwendungen und es wird vermieden, daß sogenannte Ladenhüter, das heißt also Geräteabdeckungen für seltener benötigte Größen von Verteilungseinsätzen Lagerraum beanspruchen und Kapital binden. Das Vorsehen von Öffnungen bzw. leicht austrennbaren Sektoren in der Abdeckplatte bietet zudem den Vorteil, daß die Einarbeitung von entsprechenden Öffnungen auf der Baustelle vermieden werden kann, oder, wenn die Abdeckplatte stattdessen mit Sollbruchstellen für ausbrechbare Sektoren versehen ist, so ist eine Einarbeitung der erforderlichen Öffnungen unmittelbar auf der Baustelle durchaus zumutbar, denn sie bedarf in der Regel höchstens noch einer geringen Nacharbeit mittels einer Feile, einem Messer oder einem Schmirgelwerkzeug.

Eine vorteilhafte Ausgestaltung des Erfindungsgedankens ist in einer Geräteabdeckung zu sehen, die sich aus einem aus vier Profilstücken bildenden Profilrahmen, aus vier Eckkappen und einer vom Profilrahmen vorzugsweise ringsum gehaltenen Abdeckplatte zusammensetzt. Findet hierbei eine endlose Abdeckplatte Verwendung, die für die Abdeckbreite von 500 mm geeignet ist und bei Bedarf von Geräteabdeckungen von nur 250 mm Breite entsprechend längsgeteilt werden kann, so ist durch die genannte Bauart das gesamte, eingangs geschilderte Bedarfsspektrum mit nur drei verschiedenen Grundelementen, nämlich Profilrahmen, Eckkappen und Abdeckplatte, herstellbar.

Eine andere zweckmäßige Ausgestaltung des Erfindungsgedankens ist in einer Geräteabdeckung zu sehen, deren Abdeckplatte Bestandteil des endlosen Profils ist und bei der an die Enden des Profils je eine Endkappe angeordnet und mittels deren vom Profil aufgenommenen Ansätzen gehalten ist.

Gemäß einem Ausgestaltungsvorschlag wird empfohlen, die Maße und Toleranzen sowohl der Ansätze der End- bzw. Eckkappen als auch der diese Kappen aufnehmenden Bereiche des Profils so aufeinander abzustimmen, daß die Profile und die End- bzw. Eckkappen in zusammengesteckter Lage eine selbsthaftende Verbindung miteinander eingehen. Hierdurch ist eine gesonderte Verbindung zwischen den einzelnen Teilen der Geräteabdeckung, sei es durch Kleben, Schrauben oder dergleichen, praktisch nicht mehr erforderlich. Da die Geräteabdeckung in aller Regel in am Verteilungseinsatz montierter Lage ringsum von Wandungen umgeben ist, besteht auch die Gefahr eines Auseinandernehmens oder Auseinanderfallens der Teile nicht.

Einem anderen Vorschlag zufolge ist es vorgesehen, dem Profil wenigstens einen kastenartigen oder rohrartigen, ringsum geschlossenen Profilbereich zuzuordnen, und zwar zur VErsteifung des Profils und zur Aufnahme der Ansätze der End- bzw. Eckkappen.

0008051

Eine vorteilhafte Weiterbildung für die Abdeckplatte oder für den zur Abdeckung dienenden Bereich des Profils, falls dieser Abdeckbereich Bestandteil des Profiles ist, sieht vor, hierin Öffnungen oder ausbrechbare Sektoren für die Aufnahme von Versteifungsgliedern für den Abdeckbereich anzuordnen. Hierdurch kann die Materialstärke der Abdeckplatte bzw. des Abdeckbereiches realtiv gering gehalten werden.

Weitere vorteilhafte und spezielle Ausgestaltungen können den Unteransprüchen 7 bis 10 entnommen werden.

Anhand figürlicher Darstellungen einiger Ausführungsbeispiele beziehungsweise Ausgestaltungsmöglichkeiten und der nachfolgenden Beschreibung hierzu soll der Erfindungsgedanke veranschaulicht und genauer erläutert werden.

Es zeigt

Figur 1     eine Geräteabdeckung, die sich aus Profilstücken, Eckkappen und einer Abdeckplatte zusammensetzt,

Figur 2     eine Geräteabdeckung, die sich lediglich aus einem Profilstück und zwei Endkappen zusammensetzt,

Figur 3     einen Ausschnitt einer Geräteabdeckung mit einer beiderseits einer Abdeckplatte angreifenden Versteifungsvorrichtung,

Figur 4     den Ausschnitt einer Geräteabdeckung mit einer unterhalb einer Abdeckplatte angreifenden und verrastbaren Versteifung für die Abdeckplatte,

Figur 5
und  5a     weitere Versteifungsmöglichkeiten für eine Abdeckplatte und

Figur 6    eine Versteifungsmöglichkeit für eine Abdeckplatte mittels einer anklebbaren Profilschiene.

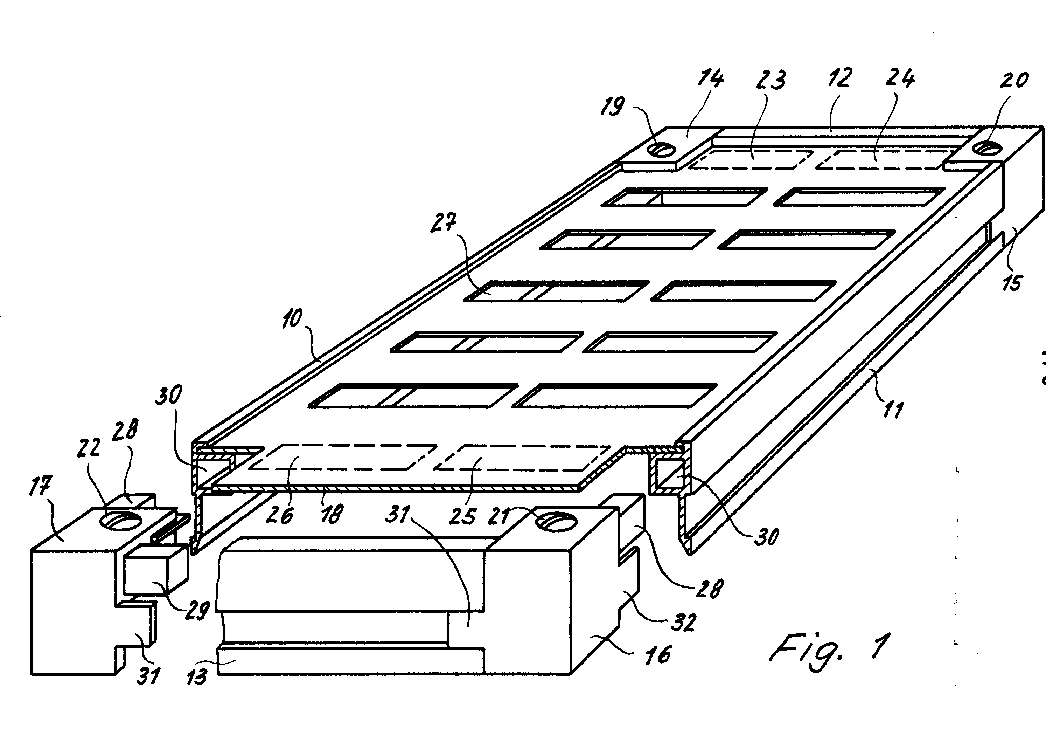

Figur 1 zeigt in perspektivischer Sicht eine erfindungsgemäße
Geräteabdeckung für schutzisolierte Verteilungseinsätze. Sie
setzt sich zusammen aus zwei seitlich angeordneten Profilstücken 10 und 11, einem oberen Profilstück 12, einem unteren
Profilstück 13 und aus vier Eckkappen 14,15,16 und 17 sowie
einer Abdeckplatte 18. Alle Profilstücke (10 bis 13) weisen
eine völlig gleiche Querschnittskontur auf und können von ein
und demselben endlosen Profilstrang entsprechend den Erfordernissen abgelängt sein. Zusammen mit den Eckkappen 14 bis 17
bilden die Profilstücke 10 bis 13 einen Abdeckrahmen, der -
wie erkennbar in entsprechenden Nuten der Profilstücke - die
Abdeckplatte unverlierbar in sich aufnimmt. Auch die Eckkappen 14 bis 17 können völlig gleich sein, aber auch, wie in
der Figur 1 angedeutet, paarweise spiegelbildlich zueinander
ausgebildet sein. Letzteres ist dann nötig, wenn die Lage
von Befestigungsbohrungen beispielsweise eine Verwendung von
völlig gleichen Eckkappen nicht zuläßt. In die Abdeckkappen
können in Befestigungsöffnungen 19,20,21 und 22 Befestigungsschrauben eingeführt werden und herausnehmbar oder unverlierbar angeordnet sein. Die Abdeckplatte 18 ist ebenfalls von
einer Endlosplatte abgetrennt, die in unmotiertem und unbearbeitetem Zustand fortlaufend ausbrechbare Bereiche aufweist. Die in dieser Darstellung erkennbaren ausbrechbaren,
jedoch nicht ausgebrochenen Bereiche sind durch unterbrochene
Linienführung dargestellt und mit den Ziffern 23 bis 26 gekennzeichnet. Weitere ausbrechbare Bereiche, die auch tatsächlich ausgebrochen sind und von denen eine mit der Ziffer
27 markiert ist, sind in der Figur erkennbar. Diese Öffnungen
dienen dem Durchtritt von Installationsgeräten oder sonstigen
Installationselementen.

Eine derartige Geräteabdeckung kann also aus vier Stücken eines Endlosprofiles, die entsprechend abgelängt sind, und aus je zwei linken und zwei rechten Eckkappen auf sehr einfache Weise hergestellt und zusammengesetzt werden. Hierbei sind besondere Befestigungsmöglichkeiten für den Zusammenhalt der Teile untereinander entbehrlich, wenn bisher unerwähnt gebliebene Anformungen 28 und 29 an den Eckkappen 14 bis 17 in kastenartige, ringsum geschlossene Profilbereiche 30 der Profilstücke 10 bis 13 selbsthaftend eingreifen. Weitere Anformungen 31 und 32 in Form von den Eckkappen 14 bis 17 ausgehenden Laschen dienen der weiteren Versteifung des sich bildenden und bereits erwähnten Profilrahmens, und sie verhindern vor allem, daß sich die nach unten weisenden Schenkel der Profilstücke 10 bis 13 in montierter Lage nach außen verbiegen.

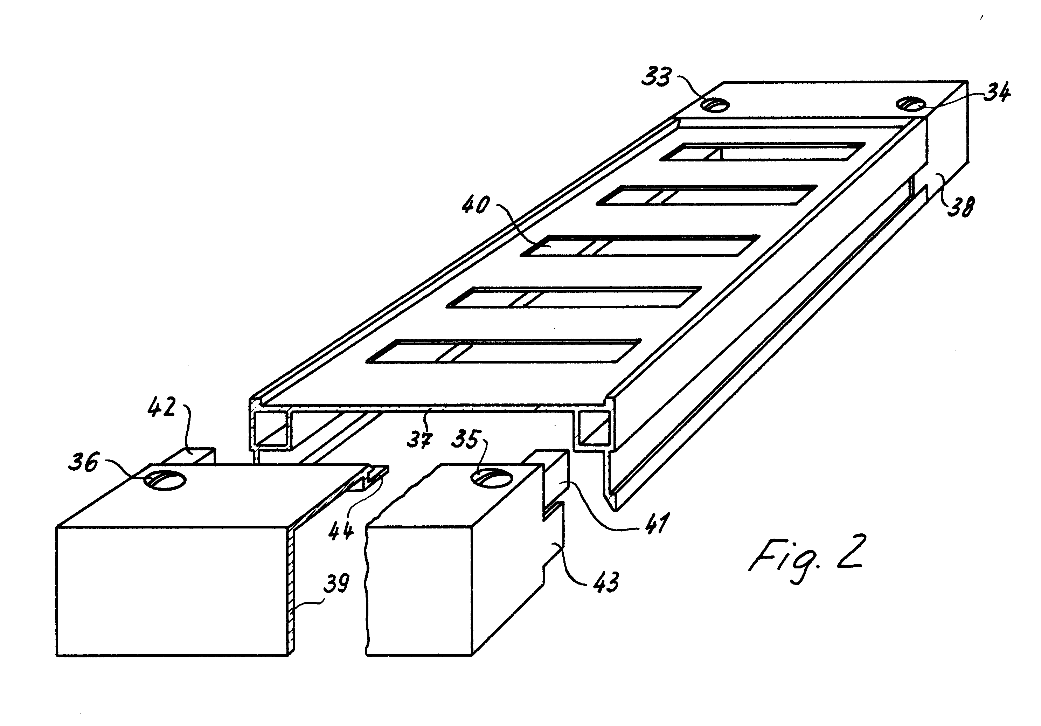

Figur 2 zeigt eine Geräteabdeckung, die sich, abgesehen von Befestigungsschrauben, die durch Befestigungsöffnungen 33 bis 36 führbar sind, lediglich aus einem abgelängten Stück eines Profiles 37 und zwei einander gleichen Endkappen 38 und 39 zusammensetzt. Dieses Profil 37 weist neben den seitlichen Außenflanken gleichzeitig den Abdeckbereich auf, der seinerseits in gleichmäßigen Abständen Öffnungen (mit der Ziffer 40 ist eine der Öffnungen gekennzeichnet) zum Durchtritt von Installationsgeräten oder dergleichen aufweist. Diese Öffnungsbereiche können auch als ausbrechbare Wandungsteile gestaltet sein, so daß lediglich die jeweils erforderlichen Öffnungsbereiche ausgebrochen werden können. Die Endkappen 38 und 39 weisen mit dem Profil 37 zusammensteckbare Anformungen 41 und 42 sowie weitere laschenartige Anformungen zur Stützung der einzelnen Profilflanken des Profils 37 auf, von denen bei der Endkappe 39 die laschenartigen Anformungen 43 und 44 erkennbar sind. Das Zusammenwirken dieser Anformungen 41 bis 44 mit dem Profil 37 ist aus der perspektivischen Darstellung in der Figur 2 anschaulich zu entnehmen. Diese Ausführungsform für eine Geräteabdeckung ist besonders einfach zu montieren und enthält nur wenige Teile, es wird allerdings für jedes Breitenmaß der Geräteabdeckungen (also zum Beispiel 250 und 500 mm) ein gesondertes Profil und eine entsprechende Endkappenausführung benötigt.

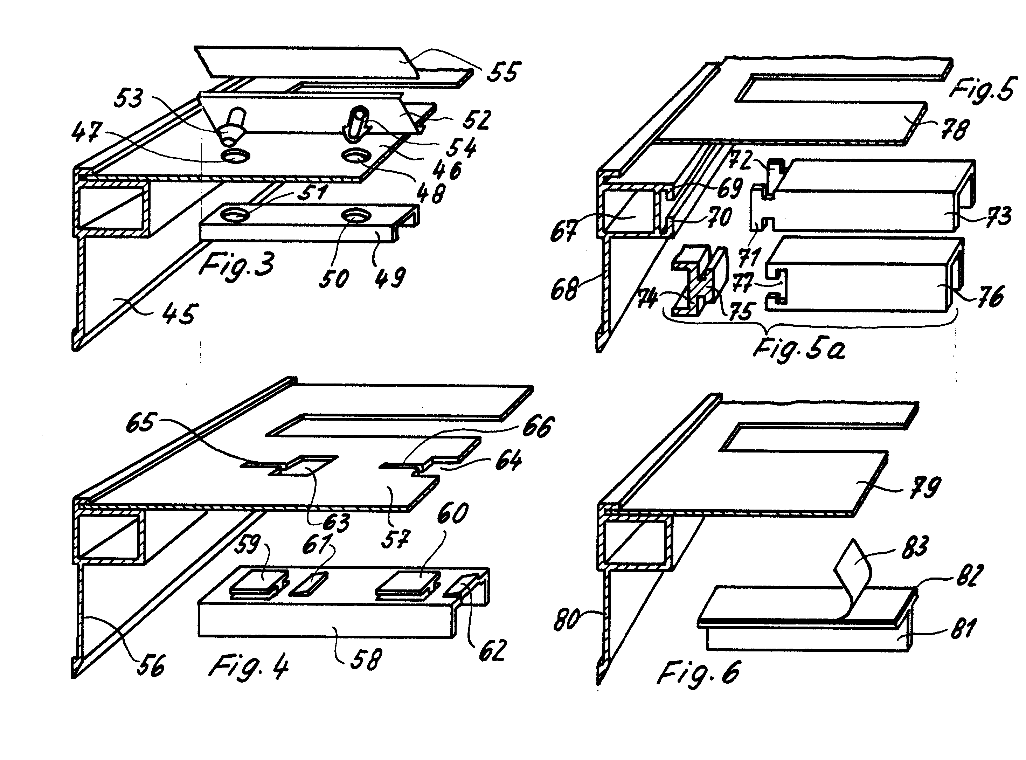

Aus Gründen der Materialersparnis, aber auch zur leichteren Abtrennbarkeit und zur problemloseren Ausbrechbarkeit einzelner Sektoren im großflächigen Abdeckbereich ist es zweckmäßig, diesen Abdeckbereich möglichst dünnwandig auszubilden. Dieses hat aber zur Folge, daß wenigstens stellenweise Versteifungen für kritische Bereiche der Abdeckplatte erforderlich werden. Vorteilhafte Ausgestaltungen derartiger Versteifungsmöglichkeiten werden in den Figuren 3 bis 6 gezeigt, in denen jeweils Teilansichten von Geräteabdeckungen in perspektivischer Sicht dargestellt sind.

Die Figur 3 zeigt eine Geräteabdeckung, die sich unter anderem aus Profilstücken (gezeigt ist das Profilstück 45) und einer Abdeckplatte 46 zusammensetzt. In dieser Abdeckplatte sind - zusätzlich zu Durchtrittsöffnungen für Installationsgeräte - erkennbare Bohrungen 47 und 48 angebracht, die zur Aufnahme einer Versteifungseinrichtung dienen. Diese Versteifungseinrichtung setzt sich aus einer unteren Profilschiene 49 mit darin angeordneten Durchtrittsöffnungen 50 und 51 und einer oberen Profilschiene 52 mit daran angeordneten Rastnocken 53 und 54 zusammen. In miteinander montierter Lage liegt die obere Profilschiene 52 flächig auf der Abdeckplatte 46 auf, wobei die Rastnocken 53 und 54 durch die Bohrungen 47 und 48 der Abdeckplatte 46 und die Durchtrittsöffnungen 50 und 51 in der unteren Profilschiene 49 ragen und hinter den Durchtrittsöffnungen 50 und 51 einrasten. Die obere Profilschiene 52 dient außer der Versteifung auch noch der Aufnahme eines Bezeichnungsschildes 55, welches selbstklebend auf der oberen Profilschiene 52 haftet. Eine derartige Versteifungseinrichtung ist verhältnismäßig billig herzustellen und ohne besondere Schwierigkeiten und sogar ohne Werkzeuge zu montieren.

Figur 4 zeigt eine hinsichtlich der Profilschienen (sichtbar die Profilschiene 56) gleich ausgebildete Geräteabdeckung, allerdings ist hier die Versteifung für eine Abdeckplatte 57 anders ausgebildet, und zwar in Form einer U-förmigen Schiene 58, die mit T-förmigen Ansätzen 59 und 60 und mit keilförmigen Rastnocken 61 und 62 ausgestattet ist. Zur Aufnahme dieser T-förmigen Ansätze 59 und 60 weist die Abdeckplatte 57 entsprechende Ausnehmungen 63 und 64 und daran angrenzende Schlitze 65 und 66 auf. Die U-förmige Schiene 58 wird also an die Abdeckplatte 57 zunächst so angelegt, daß die T-förmigen Ansätze 59 und 60 durch die Ausnehmungen 63 und 64 hindurchtreten können und sodann in Richtung der Schlitze 65 und 66 (in der Figur also nach link hin) verschoben, bis die keilförmigen Rastnocken 61 und 62 hinter den nach rechts weisenden Kanten der Ausnehmungen 63 und 64 einrasten. Bei der Ausnehmung 64 ist, da die Abdeckplatte 57 abgebrochen dargestellt ist, die Einrastkante nicht mehr sichtbar. Auf diese Weise ist eine verhältnismäßig einfache und wiederholt lösbare und wieder montierbare Versteifungseinrichtung für die Abdeckplatte 57 geschaffen.

Bei der in Figur 5 dargestellten Ausführung einer Geräteabdeckung sind an einem kastenartigen Profilbereich 67 eines Isolierstoffprofils 68 sich gegenüberstehende Abkröpfungen 69 und 70 angeformt, die ein Nutenpaar bilden, und zwar zur Aufnahme von T-förmig oder L-förmig ausgebildeten Ansätzen 71 und 72 an einem Versteifungsglied 73 in Form eines U-Profils. Eine in der Formgebung gewissermaßen umgekehrt ausgebildete Ausführung deutet die Figur 5a an. Hier ist an einem (abgebrochen dargestellten) Profil 74, auch angrenzend an einen kastenförmigen (nicht näher bezifferten) Bereich, ein T-förmiger Ansatz 75 angeformt, der zur Aufnahme eines U-förmigen Versteifungsgliedes 76 mit einer T-förmigen Nut 77 dient. Wie aus den Darstellungen in Figur 5 bzw. Figur 5a zu entnehmen ist, legen sich die Versteifungsglieder 73 bzw. 76 an eine vom Profil 68 bzw.

- 11 -

0008051

74 aufgenommene Abdeckplatte 78 an, ohne mit dieser unmittelbar verbunden zu sein. Dennoch ist ein Eindrücken der Abdeckplatte 78 in das Innere eines Verteilungseinsatzes durch solche Maßnahmen sicher verhindert.

Figur 6 schließlich zeigt eine Versteifungsmöglichkeit für eine Abdeckplatte 79, die an einem Profil 80, welches denjenigen Profilen in den Figuren 3 und 4 gleicht, gehalten ist. Hier findet ein T-förmiges Profil 81 als Versteifungsglied Verwendung, wobei auf der Oberseite des Querschenkels des Profiles 81 eine beidseitig haftende Selbstklebefolie 82 aufgebracht ist. Vor der Montage dieser Profilleiste 81 an die Abdeckplatte 79 ist die Selbstklebefolie 82 zweckmäßigerwiese mit einer Schutzfolie 83 versehen. Eine derartige Versteifung von Abdeckbereichen (79) ist hinsichtlich der konstruktiven Gestaltungen besonders einfach, sie erfordert allerdings eine sorgfältige Reinigung der Klebeflächen vor dem Ankleben und auch ein kurzzeitiges festes Andrücken des Profils 81 an die aufzunehmende Fläche an der Abdeckplatte 79.

Bei Verteilungseinsätzen, die erfahrungsgemäß einer verhältnismäßig hohen Umgebungstemperatur ausgesetzt sind, ist die Anordnung geklebter Versteifungsglieder allerdings weniger geeignet, es sei denn, daß die zu verwendende Selbstklebefolie (82) ausdrücklich als für die Anwendung bei höheren Umgebungstemperaturen geeignet ausgewiesen ist.

Wie bereits zu Beginn der Figurenbeschreibung zum Ausdruck gebracht, handelt es sich bei den dargestellten Ausführungsmöglichkeiten des Erfindungsgedankens um Ausführungsbeispiele, die in mannigfacher Weise abwandelbar sind, ohne den Erfindungsgedanken zu verlassen.

A n s p r ü c h e

1. Aus Isolierstoffprofilteilen, einsteckbaren Eckverbindern und einer Abdeckplatte zusammenfügbare Geräteabdeckung für schutzisolierte Verteilungseinsätze, dadurch gekennzeichnet, daß sie sich im wesentlichen aus wenigstens einem entsprechend den Erfordernissen senkrecht zu seiner Längsachse abgelängten Stück eines endlosen Isolierstoffprofiles (10...13; 37; 45; 56; 68; 74; 80), aus einander gleichen oder spiegelbildlichen, auch nach der Montage sichtbar bleibenden End- oder Eckkappen (14...17; 38,39) mit an die Profilierung des Isolierstoffprofiles angepaßten und mit dem Profil zusammensteckbaren Anformungen (28,29,31,32; 41...44) sowie mit Befestigungsöffnungen (19...22; 33...36) zur Befestigung der Geräteabdeckung und aus einer ebenfalls abgelängten Abdeckplatte (18; 46; 57; 78; 79) mit Öffnungen oder leicht austrennbaren Sektoren (23...27; 40) für den Durchtritt von Installationsgeräten oder sonstigen Installationselementen zusammensetzt.

2. Geräteabdeckung nach Anspruch 1, dadurch gekennzeichnet, daß sie sich aus einem aus vier Profilstücken (10...13) bildenden Profilrahmen, aus vier Eckkappen (14...17) und einer vom Profilrahmen vorzugsweise ringsum gehaltenen Abdeckplatte (18) zusammensetzt (Figur 1).

3. Geräteabdeckung nach Anspruch 1, dadurch gekennzeichnet, daß die Abdeckplatte Bestandteil des endlosen Profils (37) ist und daß an dessen Enden je eine Endkappe (38,39) angeordnet und mittels ihrer vom Profil aufgenommenen Ansätze (41...44) gehalten ist (Figur 2).

0008051

4. Geräteabdeckung nach den Ansprüchen 1 bis 3, dadurch gekennzeichnet, daß die Maße und Toleranzen sowohl der Ansätze der End- bzw. Eckkappen (14...17; 38,39) als auch der diese Kappen aufnehmenden Bereiche (30;67) des Isolierstoffprofils (10...13; 37; 45; 56; 68; 80) so aufeinander abgestimmt sind, daß die Profile und die End- bzw. Eckkappen in zusammengesteckter Lage eine selbsthaftende Verbindung miteinander eingehen.

5. Geräteabdeckung nach den Ansprüchen 1 bis 4, dadurch gekennzeichnet, daß das Profil (10...13; 37; 45; 56; 68; 80) wenigstens einen kastenartigen oder rohrartigen, ringsum geschlossenen Profilbereich (30; 67) zu seiner Versteifung und zur Aufnahme der Anformungen (28,29; 41,42) der End- bzw. Eckkappen (14...17; 38,39) aufweist.

6. Geräteabdeckung nach den Ansprüchen 1 bis 5, dadurch gekennzeichnet, daß die Abdeckplatte (46; 57) bzw. der zur Abdeckung dienende Bereich des Profils nach Anspruch 3 Öffnungen (47; 48; 63...66) oder ausbrechbare Sektoren für die Aufnahme von Versteifungsgliedern (49,52; 58) für den Abdeckbereich aufweist (Figur 3 und 4).

7. Geräteabdeckung nach den Ansprüchen 1 bis 6, dadurch gekennzeichnet, daß das Profil (68) mit sich gegenüberstehenden Abkröpfungen (69,70), ein Nutenpaar zur Aufnahme von T-förmig ausgebildeten Ansätzen (71,72) an Versteifungsgliedern (73) bildend, ausgestattet ist (Figur 5).

8. Geräteabdeckung nach den Ansprüchen 1 bis 6, dadurch gekennzeichnet, daß das Profil (74) mit einem T-förmigen Ansatz (75) zur Aufnahme von Versteifungsgliedern (76) mit T-förmiger Nut (77) ausgestattet ist (Figur 5a).

9. Geräteabdeckung nach den Ansprüchen 1 bis 8, dadurch gekennzeichnet, daß zur Versteifung der Abdeckplatte (79) bzw. des die Abdeckung bildenden Bereiches des Profiles nach Anspruch

- 3 -                              0008051

3 anklebbare Versteifungsglieder (81) dienen, die beispielsweise mittels einer beidseitig haftenden Selbstklebefolie (82)
befestigt sind (Figur 6).

10. Geräteabdeckung nach den Ansprüchen 1 bis 9, dadurch
gekennzeichnet, daß die Versteifungsglieder (49,52; 58; 73; 76;
81) von abgelängten Stücken eines Endlosprofiles gebildet werden.

Fig. 1

Fig. 2

Fig.3

Fig.4

Fig.5

Fig.5a

Fig.6

Europäisches
Patentamt

**EUROPÄISCHER RECHERCHENBERICHT**

0008051

Nummer der Anmeldung

EP 79 10 2699

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | LU - A - 62 789 (SIEMENS)<br>* Seiten 3-5 *<br><br>-- | 1,2,4,5 |
| | CH - A - 438 449 (WISAR)<br>* Ganzes Dokument *<br><br>-- | 1,2 |
| A | DE - A - 1 515 970 (KUKLIES)<br><br>-- | 1 |
| L | FR - A - 2 395 629 (B.B.C.)<br><br>---- | 1 |

**KLASSIFIKATION DER ANMELDUNG (Int.Cl. 3)**

H 02 B 1/08

**RECHERCHIERTE SACHGEBIETE (Int. Cl. 3)**

H 02 B 1/08
H 02 B 1/06
H 02 B 1/02
H 02 B 9/00
H 02 B 1/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-11-1979 | DAILLOUX |

EPA form 1503.1  06.78